**Europäisches Patentamt**

**European Patent Office**

**Office européen des brevets**

(19)

(11) Veröffentlichungsnummer: **0 258 605 B1**

# EUROPÄISCHE PATENTSCHRIFT

(12)

(45) Veröffentlichungstag der Patentschrift: **15.04.92**

(51) Int. Cl.⁵: **C04B 35/60**, C09K 3/14

(21) Anmeldenummer: **87110570.6**

(22) Anmeldetag: **21.07.87**

(54) **Vorrichtung und Verfahren zur Herstellung von oxidkeramischen Materialien.**

(30) Priorität: **15.08.86 CH 3287/86**
**09.02.87 CH 461/87**

(43) Veröffentlichungstag der Anmeldung:
**09.03.88 Patentblatt 88/10**

(45) Bekanntmachung des Hinweises auf die
Patenterteilung:
**15.04.92 Patentblatt 92/16**

(84) Benannte Vertragsstaaten:
**AT CH DE FR IT LI**

(56) Entgegenhaltungen:
**EP-A- 0 057 651**
**EP-A- 0 139 071**
**GB-A- 2 010 736**
**US-A- 3 208 101**

(73) Patentinhaber: **LONZA-Werke GmbH**

**W-7890 Waldshut(DE)**

(72) Erfinder: **Haas, Erwin**
**Waldeckstr. 78**
**W-7842 Kandern(DE)**
Erfinder: **Schmitz, Heinz-Withold**
**Frans-Hals-Str. 24**
**W-4630 Bochum(DE)**

(74) Vertreter: **Finck, Dieter et al**
**Patentanwälte v. Füner, Ebbinghaus, Finck**
**Mariahilfplatz 2 & 3**
**W-8000 München 90(DE)**

**Beschreibung**

Die Erfindung betrifft eine Vorrichtung und ein Verfahren zur Herstellung von oxidkeramischen Materialien durch schnelles Abkühlen und Erstarren von geschmolzenen Materialien auf der Basis von Metalloxiden, wobei die Vorrichtung zwei waagrecht angebrachte Metallzylinder mit parallelen Achsen aufweist, die sich gegenläufig drehen und gekühlt sind.

Aus der EP-PS 0 057 651 und der EP-PS 0 139 071 ist ein Verfahren und eine Vorrichtung bekannt zum schnellen Erstarren und Abkühlen durch Stranggiessen von geschmolzenen Metalloxiden, durch Einführen des geschmolzenen Materials in den konvergierenden Zwischenraum, der durch zwei Zylinder mit parallelen Achsen gebildet wird. Die Abkühlung des geschmolzenen Materials muss derart gesteuert werden, dass sich ein Keil schmelzflüssigen Materials, über die den Drehachsen der Zylinder gemeinsame Ebene hinaus, nach unten fortsetzt. Das Verfahren bedarf eines hohen Steueraufwandes. Bei zu rascher Erstarrung wandert die Erstarrungsgrenze über die Ebene der Drehachsen der Zylinder, das erstarrte Material kann nicht mehr ausgetragen werden, und die Zylinder drehen leer durch. Wird die Abkühlungsrate erniedrigt, erreicht man wohl einen sicheren Durchtritt des Materials durch den Zylinderspalt, das resultierende Produkt weist aber nicht mehr die gewünschte Kristallinität auf.

Aufgabe vorliegender Erfindung ist es, die Nachteile erwähnter Art zu vermeiden und eine Vorrichtung und ein Verfahren zu beschreiben, das leicht zu handhaben ist und hohe Abkühlungsraten für die Metalloxidschmelze ermöglicht, ohne zu Betriebsunterbrüchen durch vorschnelles Erstarren zu führen.

Erfindungsgemäss wird dies durch eine Vorrichtung erreicht, bei der die Aussenseite der Zylinder eine im Abrollumfang gewellte Oberfläche aufweist und jeweils eine Erhebung in der Oberfläche des einen Zylinders in eine entsprechende Vertiefung in der Oberfläche des anderen Zylinders eingreift, wobei die beiden Zylinderoberflächen in der Höhe der den beiden Drehachsen gemeinsamen Ebene einen freien Spalt von wenigstens 0,5 mm und maximal von 10 mm ausbilden.

In einer zweckmässigen Ausführungsform beträgt der der Oberflächenlinie folgende Umfang der Zylinder 110 bis 157%, vorzugsweise 120 bis 140%, des mittleren Umfanges der Zylinder. Als mittlerer Umfang soll der Umfang verstanden werden, der sich aus der Linie durch die Mitte zwischen der jeweils höchsten Stelle der Erhebungen und tiefsten Stelle der Vertiefungen der gewellten Oberfläche ergibt.

Der mittlere Radius R der Zylinder beträgt zweckmässig 200 bis 1000 mm, vorzugsweise 400 bis 600 mm. Das Verhältnis des mittleren Radius R zum Radius der Erhebung $R_1$ beträgt zweckmässig 5 zu 1 bis 20 zu 1.

Die gewellte Oberfläche weist vorzugsweise im Querschnitt halbkreisförmige Erhebungen mit einem Radius $R_1$ und halbkreisförmige Vertiefungen mit einem Radius $R_2$, wobei $R_2$ gleich $R_1$ + 0,5 bis 10 mm ist, über den ganzen Umfang auf.

Das erfindungsgemässe Verfahren wird in der beschriebenen Vorrichtung derart ausgeführt, dass die Schmelze von einem Ofen oder Haltetiegel, in Mengen von 1 bis 100 kg/min., mit einer Temperatur von ca. 2400 °C auf die Walzen gegossen wird. Die Schmelze wird durch die angetriebenen Zylinder und insbesondere durch die erfindungsgemässe Oberflächengestaltung der Zylinder zwangsweise in den Walzenspalt gezogen. Die Schmelze erstarrt auf die Zylinderoberfläche unter dem äusseren Druck der Zylinder im Bereich des konvergierenden Zylinderspaltes. Das erstarrte Material fällt durch Schwerkraft aus dem Arbeitsbereich der Zylinder, wobei die Temperatur des erstarrten Materials auf unter 1600 °C gefallen ist. Während des ganzen Abgusses werden die Zylinder intensiv von innen und gegebenenfalls auch von aussen gekühlt.

Das erfindungsgemässe Verfahren eignet sich zur Verarbeitung von keramischen Schmelzen aus Aluminiumoxid in Mischung mit Baddeleyit und/oder den Oxiden des Zirkons, Magnesiums, Yttriums, Calciums and Chroms in Form von Ein- oder Mehrstoffsystemen, insbesondere zu Materialien für Schleifzwecke, als Plasmaspritzpulver und als Sinterpulver für Formteile.

Anhand von Zeichnungen werden Ausführungsbeispiele der Erfindung näher erläutert. Es zeigt:

Fig. 1      schematisch in einer Stirnansicht eine erste Ausführungsform der Vorrichtung,

Fig. 2      die Vorrichtung von Fig. 1 perspektivisch,

Fig. 3      perspektivisch eine zweite Ausführungsform der Vorrichtung und

Fig. 4      perspektivisch eine dritte Ausführungsform der Vorrichtung.

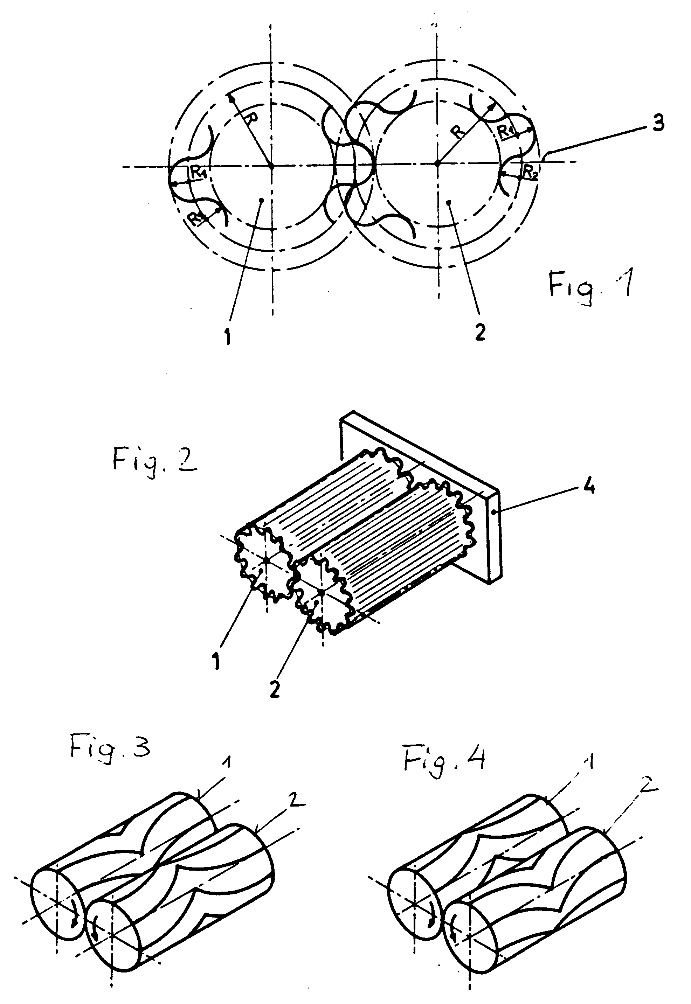

Fig. 1 zeigt einen Querschnitt durch die beiden Zylinder 1 und 2, die beide den gleichen mittleren Radius R aufweisen. Aus dem mittleren Radius R ergibt sich auch der mittlere Umfang der Zylinder. Die gewellte Oberfläche ist in einer bevorzugten Ausführungsform dargestellt, indem die Erhebungen mit einem Radius $R_1$ einen halbkreisförmigen Querschnitt aufweisen, und die Vertiefungen mit einem Radius $R_2$ einen halbkreisförmigen Querschnitt aufweisen. Die Zylinder weisen eine gemeinsame Ebene 3 in der Höhe der Drehachsen auf. Durch die unterschiedlichen Grössen der Ra-

dien $R_1$ und $R_2$, der 0,5 bis 10 mm betragen kann, ergibt sich auf der Ebene 3 ein entsprechender Spalt von 0,5 bis 10 mm.

In Fig. 2 sind die Zylinder 1 und 2 ersichtlich, wobei die gewellten Oberflächen in gegenseitigem Eingriff sind. Die beiden Stirnseiten der zwei Zylinder sind mit Dichtungselementen 4, vorzugsweise aus Metall, Graphit oder Keramik (hier nur das hintere dargestellt) versehen, die ein seitliches Ablaufen der Schmelze verhindern.

Andere Ausführungsformen sind möglich, beispielsweise kann die gewellte Oberfläche an den beiden Randbereichen jedes Zylinders einem runden Zylinderquerschnitt weichen, und die konvergierenden Dichtungselemente können auf diesen glatten Randbereichen in den Spaltbereich zwischen den Zylindern hineinragen.

Ferner können die Dichtungselemente in runder Form ausgeführt und direkt an den Zylindern angebracht werden, wobei die Dichtungselemente, mit einem Radius grösser als der Zylinderradius, übergreifend jeweils endständig an beiden Zylindern oder beidseitig an einem Zylinder oder wechselseitig an jeweils nur einer Stirnseite eines Zylinders angebracht werden können.

Die Zylinder 1 und 2 werden durch einen Antrieb in Drehung versetzt, wobei die Zylinder gegenläufig drehen und durch ein Schleppgetriebe, einen Kettenantrieb oder dergleichen oder durch die Synchronisation zweier Antriebsvorrichtungen gleichzeitig in gleicher Drehzahl angetrieben werden.

Die Zuführung der Schmelze in den Spaltbereich zwischen die Zylinder erfolgt von einem Ofen oder Haltetiegel, dessen Auslass die Form einer Abgußschnauze hat.

In Fig. 3 ist eine weitere Ausführungsform der gewellten Oberfläche der Zylinder gezeigt. Diese Ausführungsform hat den Vorteil, einen verbesserten Einzug der Schmelze in den Kühlbereich zu erzielen, oder, in Fig. 4 ist eine Ausführungsform dargestellt, um eine verbesserte Verteilung der Schmelze über die gesamte Breite der Zylinder zu erreichen.

Eine Anordnung der Erhebungen und Vertiefungen, die nicht parallel zu den Zylinderachsen verlaufen, sondern schräg dazu im Sinne einer Schrägverzahnung, ist ebenfalls möglich und bewirkt ein besseres Einziehen der Schmelze und eine bedingte steuerbare Vorzerkleinerung.

Die Achsen der beiden Zylinder stützen sich endständig auf entsprechend dimensionierte Lager ab. Aus Sicherheitsgründen und für Zwecke der Revision sind die Zylinder auslenkbar und ausweichbar. Die Zylinder sind mit Kühlvorrichtungen versehen und können von innen, aussen oder von beiden Seiten gekühlt werden.

Als Kühlmedium kommen die an sich bekannten Gase und Flüssigkeiten, wie Luft und Wasser zur Anwendung. Kreisläufe von beispeilsweise Oelen oder Salzschmelzen können aber ebenso Anwendung finden, wie die Kühlung mit in ihrer Wirkung inerten Gasen.

Die Zylinder werden beispielsweise aus Stahl oder Kupfer hergestellt und weisen in der Regel eine Breite von 500 bis 1500 mm auf. Beliebige andere Werkstoffe, die eine zur Abführung der Schmelzwärme ausreichend hohe thermische Leitfähigkeit und ausreichende mechanische und thermische Stabilität aufweisen, sind ebenfalls einsetzbar.

Die Breite der Zylinder richtet sich nach der Menge an Schmelze, die pro Zeiteinheit aufgegeben wird. Die Drehzahl der Zylinder liegt in der Regel bei 0,1 bis 50 U/min., vorzugsweise bei 0,5 bis 5 U/min.

## Patentansprüche

1. Vorrichtung zum schnellen Abkühlen und Erstarren von geschmolzenen Materialien auf der Basis von Metalloxiden, die zwei waagrecht angebrachte Metallzylinder (1, 2), mit parallelen Achsen, die sich gegenläufig drehen und gekühlt sind, aufweist, dadurch gekennzeichnet, daß die Außenseite der Zylinder (1, 2) eine im Abrollumfang gewellte Oberfläche aufweist und jeweils eine Erhebung ($R_1$) in der Oberfläche des einen Zylinders (1) in eine entsprechende Vertiefung ($R_2$) in der Oberfläche des anderen Zylinders (2) eingreift, wobei die beiden Zylinderoberflächen in der Höhe der den beiden Drehachsen gemeinsamen Ebene (3) einen freien Spalt von wenigstens 0,5 mm und maximal von 10 mm ausbilden.

2. Vorrichtung nach Patentanspruch 1, dadurch gekennzeichnet, daß der der Oberflächenlinie folgende Umfang der Zylinder (1, 2) 110 bis 157%, vorzugsweise 120 bis 140%, des mittleren Umfanges der Zylinder entspricht.

3. Vorrichtung nach Patentansprüchen 1 und 2, dadurch gekennzeichnet, daß der mittlere Radius R der Zylinder (1, 2) 200 bis 1000 nm, vorzugsweise 400 bis 600 mm beträgt.

4. Vorrichtung nach Patentanspruch 1, dadurch gekennzeichnet, daß die gewellte Oberfläche im Querschnitt halbkreisförmige Erhebungen mit einem Radius $R_1$ abwechselnd mit halbkreisförmigen Vertiefungen mit einem Radius $R_2$, wobei $R_2$ gleich $R_1$ +0,5 bis 10 mm ist, über den ganzen Umfang aufweist.

5. Vorrichtung nach Patentansprüchen 1 bis 4, dadurch gekennzeichnet, dass der mittlere Radius R der Zylinder (1, 2) zum Radius der Erhebungen $R_1$ in einem Verhältnis von 5 zu 1 bis 20 zu 1 zueinander steht.

6. Vorrichtung nach Patentansprüchen 1 bis 5, dadurch gekennzeichnet, dass die Zylinder (1, 2) zwangsweise die gleiche Drehzahl aufweisen.

7. Verfahren zum schnellen Abkühlen und Erstarren von geschmolzenen Materialien auf der Basis von Metalloxiden, ausgeführt in einer Vorrichtung nach den Ansprüchen 1 bis 6, durch einlaufen lassen der Schmelze in einen Spalt zwischen zwei waagrecht angebrachten Zylindern mit parallelen Achsen, die sich gegenläufig drehen und gekühlt sind, dadurch gekennzeichnet, dass die Schmelze von Zylindern aufgenommen wird, die eine im Abrollumfang gewellte Oberfläche aufweisen und jeweils eine Erhebung in der Oberfläche des einen Zylinders unter Ausbildung eines Walzenspaltes in eine entsprechende Vertiefung in der Oberfläche des anderen Zylinders eingreift, und die Schmelze in den Walzenspalt gezogen, unter Druck gekühlt und das erstarrte Material im divergierenden Teil der Zylinder durch Schwerkraft abfällt.

## Claims

1. A device for rapid cooling and solidification of molten materials based on metal oxides, the device comprising two horizontally disposed metal cylinders (1, 2) with parallel axes which are cooled and rotate in opposite directions, characterised in that the outside surface of the cylinders (1, 2) is corrugated along the rolling periphery and a respective raised portion ($R_1$) on the surface of one cylinder (1) engages in a corresponding recess ($R_2$) in the surface of the other cylinder (2), the two cylinder surfaces forming a free gap of at least 0.5 mm and not more than 10 mm at the level of the plane (3) common to the two axes of rotation.

2. A device according to claim 1, characterised in that the periphery of the cylinders (1, 2) following the surface line is 110 to 157%, preferably 120 to 140%, of the average periphery of the cylinders.

3. A device according to claims 1 and 2, characterised in that the average radius R of the cylinders (1, 2) is 200 to 1000 mm, preferably 400 to 600 mm.

4. A device according to claim 1, characterised in that the corrugated surface, in cross-section over its entire periphery, has semicircular raised portions of radius $R_1$ alternating with semicircular recesses of radius $R_2$, $R_2$ being equal to $R_1$ + 0.5 to 10 mm.

5. A device according to claims 1 to 4, characterised in that the ratio of the average radius R of the cylinders (1, 2) to the radius of the raised portions $R_1$ is from 5 : 1 to 20 : 1.

6. A device according to claims 1 to 5, characterised in that the cylinders (1, 2) are forcibly given the same speed of rotation.

7. A method of rapid cooling and solidification of molten materials based on metal oxides, the method being performed in a device according to claims 1 to 6, by running the melt into a gap between two cylinders with parallel axes which are cooled and rotate in opposite directions, characterised in that the melt is received by cylinders which have a corrugated surface along the rolling periphery, and a respective raised portion on the surface of one cylinder forms a nip by engaging in a corresponding recess in the surface of the other cylinder, and the melt is drawn into the nip and cooled under pressure and the solidified material falls through gravity in the divergent part of the cylinders.

## Revendications

1. Dispositif pour le refroidissement et la solidification rapides de matériaux fondus à base d'oxydes métalliques, qui comporte deux cylindres métalliques (1, 2) disposés horizontalement et dont les axes sont parallèles, qui tournent en sens inverse et qui sont refroidis, caractérisé en ce que le côté externe des cylindres (1, 2) présente sur la périphérie de roulement une surface ondulée et qu'à chaque fois une protubérance ($R_1$) de la surface d'un cylindre (1) pénètre dans un évidement ($R_2$) correspondant de la surface de l'autre cylindre (2), les deux surfaces des cylindres formant au niveau du plan (3) commun aux deux axes de rotation un interstice libre d'au moins 0,5 mm et d'au plus 10 mm.

2. Dispositif selon la revendication 1, caractérisé en ce que la périphérie des cylindres (1, 2) qui suit la ligne de surface représente 110 à 157%, de préférence 120 à 140%, de la périphérie moyenne des cylindres.

**3.** Dispositif selon les revendications 1 et 2, caractérisé en ce que le rayon moyen R des cylindres (1, 2) est de 200 à 1000 mm, de préférence de 400 à 600 mm.

**4.** Dispositif selon la revendication 1, caractérisé en ce que la surface ondulée présente en section transversale sur toute la périphérie des protubérances semicirculaires de rayon $R_1$ qui alternent avec des évidements semicirculaires de rayon $R_2$, $R_2$ étant égal à $R_1$ + 0,5 à 10 mm.

**5.** Dispositif selon les revendications 1 à 4, caractérisé en ce que le rayon moyen R des cylindres (1, 2) et le rayon $R_1$ des protubérances sont dans un rapport de 5 à 1 à 20 à 1.

**6.** Dispositif selon les revendications 1 à 5, caractérisé en ce que les cylindres (1, 2) présentent de manière forcée la même vitesse de rotation.

**7.** Procédé de refroidissement et de solidification rapides de matériaux fondus à base d'oxydes métalliques, mis en oeuvre dans un dispositif selon les revendications 1 à 6, par introduction de la masse fondue dans un interstice entre deux cylindres à axes parallèles disposés horizontalement, qui tournent en sens inverse et qui sont refroidis, caractérisé en ce que la masse fondue est reçue par les cylindres qui présentent une surface ondulée sur la périphérie de roulement et dans lesquels une protubérance de la surface d'un cylindre pénètre dans un évidement correspondant de la surface de l'autre cylindre en formant un interstice ente les cylindres, et la masse fondue est amenée dans l'interstice entre les cylindres, refroidie sous pression et le matériau solidifié tombe par gravité dans la partie divergente des cylindres.

Fig. 1

Fig. 2

Fig. 3

Fig. 4